# EUROPÄISCHE PATENTANMELDUNG

(11) **EP 1 531 245 A2**
(43) Veröffentlichungstag der Anmeldung: **18.05.2005**
(21) Anmeldenummer: 04021082.5
(22) Anmeldetag: 04.09.2004
(51) Int. Cl.: F02D 9/10, F02M 35/10

(54) **Wellendurchführung an einem Luftansaugkanalsystem**

(30) Priorität: 15.11.2003 DE 10353431
(71) Anmelder: Pierburg GmbH, 41460 Neuss (DE)
(72) Erfinder: Sovva, Elina, 47167 Duisburg (DE); Hüsges, Hans-Jürgen, 47877 Willich (DE)
(74) Vertreter: Ter Smitten, Hans

(57) **Zusammenfassung**

In der vorliegenden Erfindung wird eine Wellendurchführung an einem Luftansaugkanalsystems beschrieben, bei der erfindungsgemäß die Welle durch ein Element geführt ist, welches einteilig als Lager- und Dichtelement (10) ausgeführt ist. Eine solche Wellendurchführung eignet sich für die Lagerung beziehungsweise Durchführung unterschiedlicher Klappenvorrichtungen (4), die beispielsweise als Tumbleklappen, Schaltklappen oder Drallklappen im Luftansaugkanalsystem dienen können. Die Ausführung als Lager-/Dichtelement (10) verhindert Fluchtungsfehler zwischen den Lagerelementen (7) und einem Dichtelement (10), so daß ein Verklemmen der entsprechenden Welle (5) der Klappenvorrichtung (4) im Betrieb des Luftansaugkanalsystems verhindert wird.

## Beschreibung

Die Erfindung betrifft eine Wellendurchführung an einem Luftansaugkanalsystem für Verbrennungskraftmaschinen, wobei das Luftansaugkanalsystem ein zumindest zweiteiliges Gehäuse aufweist, in welchem Luftansaugkanäle ausgebildet sind, wobei zwischen den beiden Gehäuseteilen eine Klappenvorrichtung angeordnet ist, welche eine Welle und zumindest einen auf der Welle angeordneten Klappenkörper aufweist, von einer Stellvorrichtung antreibbar ist und die mit Lagerelementen, die drehbar auf der Welle angeordnet sind, formschlüssig in korrespondierenden Ausnehmungen des ersten Gehäuseteils einlegbar ist, wobei ein Dichtelement in einer gemeinsamen Öffnung der beiden Gehäuseteile angeordnet ist, durch die die Welle der Klappenvorrichtung zur direkten oder indirekten Verbindung mit der Stellvorrichtung aus dem Gehäuse nach außen ragt.

Derartige Luftansaugkanalsysteme mit mehrteiligen Gehäusen sind allgemein bekannt und werden in einer Vielzahl von Anmeldungen beschrieben. Die in den Gehäusen angeordneten Klappenvorrichtungen können dabei je nach Anordnung im Saugkanal und Ausführung des Luftansaugkanalsystems als Schaltklappen zur Verstellung der wirksamen Schwingrohrlänge oder als Tumbleklappen oder Drallklappen zur Erzeugung einer gewünschten Ladungsbewegung im Zylinder verwendet werden. In all diesen Ausführungen ist es notwendig, die Welle der Klappenvorrichtung aus dem Gehäuse nach außen zu führen um sie indirekt oder direkt mit einer Steilvorrichtung zu verbinden, welche die Welle jeweils entsprechend der Lastzustände des Motors in die gewünschte Stellung dreht. Dazu ist üblicherweise in der am Gehäuse des Luftansaugkanalsystems angeordneten Öffnung, durch die die Welle reicht ein Dichtelement zur Abdichtung der Luftansaugkanäle gegenüber der Atmosphäre angeordnet.

Eine solche Ausführung wird anhand eines längenveränderbaren Luftansaugkanalsystems in der DE 196 14 474 A1 offenbart. Die hier vorhandene Schaltklappenvorrichtung weist mehrere hintereinander liegende auf einer Welle angeordnete Klappenkörper auf, welche einen Kurzschlußkanal im Luftansaugkanalsystem beherrschen. Die Welle ist über Lagerelemente in ein erstes Gehäuseteil des Luftansaugkanalsystems einlegbar, wobei die Lagerelemente sowohl zweiteilig mit einer in Achsrichtung verlaufenden Trennebene als auch einteilig ausgeführt sein können. Im Bereich der Öffnung, durch die die Welle der Klappenvorrichtung nach außen reicht, ist ein zusätzliches Dichtelement angeordnet, welches in eine axial fluchtende Lage zu den Lagerelementen angebracht werden muß.

Nachteilhaft an diesen bekannten Ausführungsformen ist es, daß vielfach ein Verklemmen der Klappenvorrichtung aufgrund von Fluchtungsfehlern zwischen dem Dichtelement und insbsondere dem nächstliegenden Lagerelement auftreten.

Daher ist es Aufgabe der Erfindung Fluchtungsfehler zwischen dem Dichtelement und dem Lagersegment zu vermeiden und somit ein Klemmen der Klappenwelle zu verhindern. Des weiteren soll zur Vereinfachung der Montage möglichst eine Teilereduzierung erzielt werden, womit eine weitere Bearbeitung des Gehäuses insbesondere im Bereich der Durchführung der Welle entfallen soll.

Diese Aufgabe wird dadurch gelöst, daß die Welle durch das am nächsten zur Stellvorrichtung angeordnete Lagerelement, welches in axialer Richtung im wesentlichen bis zu der axial begrenzenden Außenwand des Gehäuses verlängert ausgeführt ist und gleichzeitig als Dichtelement dient, nach außen geführt ist. Hierdurch wird eine Teilereduzierung erreicht, wobei gleichzeitig Fluchtungsfehler zwischen dem Lagersegment und dem Dichtelement vermieden werden, so daß zuverlässig ein Klemmen der Klappen bzw. der Klappenwelle verhindert wird und eine Bearbeitung des Druckgußgehäuses entfällt.

In einer bevorzugten Ausführungsform sind die Lager-/Dichtelemente zweiteilig ausgeführt, wobei die Trennebene in Axialrichtung verläuft. Die beiden aus einer solchen Ausführung resultierenden Lagerhälften, die gleichzeitig als Dichtelementhälften dienen, werden dabei vorzugsweise über der Lagermitte miteinander verrastet wodurch sich die Herstellung der Lagerpaßstücke und deren Montage sehr vereinfacht.

In einer alternativen Ausführungsform sind die Lager-/Dichtelemente einteilig durch Montagespritzen der Welle in den Lagerelementen hergestellt, so daß eine zusätzliche Bauteilereduzierung die Folge ist und weitere Montageschritte eingespart werden können.

In einer weiterführenden Ausführungsform sind die Lager-/Dichtelemente in Achsrichtung gesehen, U-förmig ausgebildet, wobei der im wesentlichen runde Bereich im ersten Gehäuseteil angeordnet ist. Eine solche Ausführung erleichtert zusätzlich die Montage, da die Lage der Lagerelemente und somit der Klappenvorrichtung im Gehäuse automatisch vorgegeben ist und ein Verdrehen der Lagerelemente bereits im ersten Gehäuse verhindert wird.

In einer weiterführenden Ausführungsform ist das Lager-/Dichtelement in das erste Gehäuseteil unter Zwischenlage einer vorzugsweise angespritzten Kunststoffdichtung eingebracht, welche in einer über den mit dem ersten Gehäuseteil korrespondierenden Umfang des Lager-/Dichtelementes verlaufenden Nut, angeordnet ist. Hierdurch wird eine sichere Abdichtung zwischen dem Lager- beziehungsweise Dichtelement und dem ersten Gehäuseteil erreicht, so daß Strömungen zwischen dem Innenraum des Luftansaugkanalsystems und der außenliegenden Atmosphäre verhindert werden.

In einer weiteren Ausführungsform weist das Lager-/Dichtelement an seinem im zweiten Gehäuseteil angeordneten Bereich eine senkrecht zur Achse verlaufende Nut auf, in welche ein am zweiten Gehäuseteil ausgebildeter Steg unter Zwischenlager einer Flüssigkeitsdichtung eingreift. Durch eine solche Ausführungsform wird die Lage des zweiten Gehäuseteils am Lager- beziehungsweise Dichtelement festgelegt als auch durch die Flüssigkeitsdichtung eine sichere Abdichtung nach außen erreicht. Eine solche Flüssigkeitsdichtung kann automatisch von einem Roboter aufgebracht werden und härtet nach Zusammenbau des Luftansaugkanalsystems aus.

In einer bevorzugten Ausführungsform ist auf einem nach außen weisenden Ende der Welle ein Kopplungsglied zur Übertragung einer Drehbewegung von der Stellvorrichtung auf die Welle angeordnet, welches einen ringförmigen Vorsprung aufweist, der in das Lager-/Dichtelement hinein ragt und auf dem eine Dichtung angeordnet ist, die vom Lager-/Dichtelement umschlossen ist, wodurch die Abdichtung zwischen dem Lager- beziehungsweise Dichtelement und dem Kopplungsglied sicher gestellt wird. Zusätzlich wird auf diese Weise auch eine Abdichtung zwischen Welle und Lagerelement erreicht.

In einer dazu weiterführenden Ausführungsform ist das Kopplungsglied ein Hebel, der über ein Gestänge mit der Stellvorrichtung in Verbindung steht, so daß beispielsweise mehrere Klappenwellen über eine Stellvorrichtung in Drehung versetzbar sind.

In einer bevorzugten Ausführungsform ist die vom Lagersegment umschlossene Dichtung ein Lippendichtring oder eine angespritzte Dichtung. Diese Ausführungsformen sind einfach zu montieren beziehungsweise herzustellen und erfüllen die Anforderungen einer zuverlässigen Abdichtung.

All diese Ausführungsformen und Weiterbildungen dienen gleichzeitig einer zuverlässigen Abdichtung zwischen Luftansaugkanalinnenteil und außen liegender Atmosphäre als auch einer Vereinfachung der Montage, wobei ein Verkanten durch Fluchtungsfehler zwischen Dichtelement und Lagerelement vollständig ausgeschlossen wird.

Ein Ausführungsbeispiel einer erfindungsgemäßen Wellendurchführung ist am Beispiel einer Tumblewellendurchführung dargestellt und wird nachfolgend beschrieben.

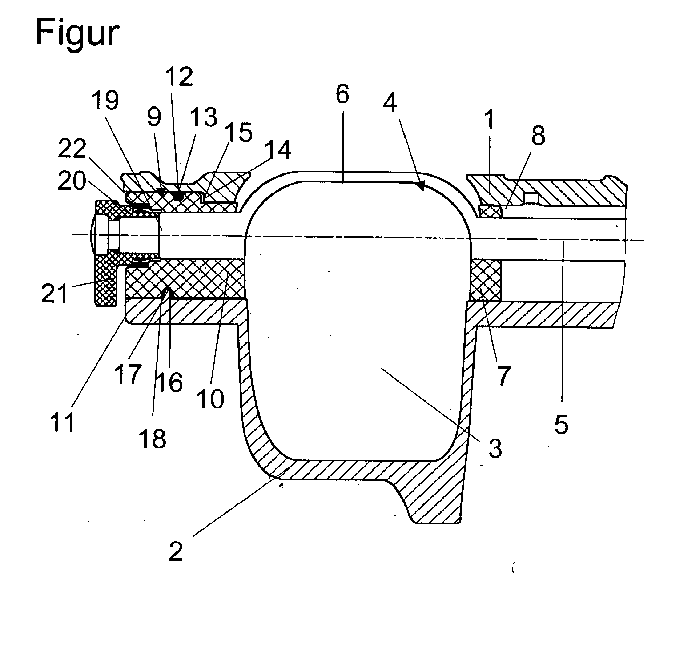

Die Figur zeigt in geschnittener Darstellung einen Ausschnitt eines Luftansaugkanalsystems mit erfindungsgemäßer Wellendurchführung.

Der Ausschnitt eines Luftansaugkanalsystems gemäß der Figur zeigt einen Ausschnitt eines ersten Gehäuseteils 1, welches im vorliegenden Fall das Saugrohrunterteil bildet sowie eines zweiten Gehäuseteils 2, welches im vorliegenden Fall das Gehäuseoberteil bildet. Im zusammen gesetzten Zustand der beiden Gehäuseteile 1, 2 werden Luftansaugkanäle 3 gebildet, von denen in der Figur ein einzelner Luftansaugkanal 3 ersichtlich ist.

Zwischen dem Gehäuseunterteil 1 und dem Gehäuseoberteil 2 ist eine Klappenvorrichtung 4 angeordnet, welche aus einer Welle 5 und einem im vorliegenden Ausführungsbeispiel mit der Welle einteilig hergestellten Klappenkörper 6 besteht. Diese Klappenvorrichtung 4, welche im vorliegenden Ausführungsbeispiel als Tumbleklappenvorrichtung zur Erzeugung eines Dralls im Luftansaugkanal 3 dient, wird von einer nicht dargestellten Stellvorrichtung angetrieben, das heißt in Drehung versetzt. Die Lagerung der Klappenvorrichtung 4 im Gehäuse 1, 2 erfolgt über Lagerelemente 7, welche U-förmig ausgebildet sind und vor Befestigen des Gehäuseoberteils 2 in Ausnehmungen 8 des Gehäuseunterteils 1 einlegbar sind, wobei ein Verdrehen der Lagerelemente in Umfangsrichtung durch die U-Form vermieden wird und die exakte Platzierung im ersten Gehäuseteil 1 vereinfacht wird.

Das gesamte Luftansaugkanalsystem besteht nun aus mehreren hintereinander angeordneten Luftansaugkanälen 3 in denen jeweils ein Klappenkörper 6 zu liegen kommt, der auf der Welle 5 befestigt ist. Der hier abgebildete Luftansaugkanal 3 ist der außen liegende Luftansaugkanal 3, bei dem die Welle 5 zur Betätigung durch die Stellvorrichtung aus dem Gehäuse 1, 2 durch eine gemeinsame Öffnung 9 geführt wird. Erfindungsgemäß ist nun das axial außen liegende Lagerelement 7 derart ausgebildet, daß es gleichzeitig als Lager- und Dichtelement 10 dient. Entsprechend reicht seine axiale Ausdehnung bis zur Gehäuseaußenwand 11 des Luftansaugkanalsystems. Im Ausführungsbeispiel wird die Klappenvorrichtung 4 in den Lagerelementen 7 beziehungsweise dem Lager-/Dichtelement 10 Montage gespritzt. Das Lager-/Dichtelement 10 weist zur Abdichtung des Luftansaugkanalinnenraums gegenüber der außen liegenden Atmosphäre eine erste Nut 12 auf, in der eine angespritzte Kunststoffdichtung 13 angeordnet ist, welche um den im ersten Gehäuseteil 1 angeordneten ringförmigen Abschnitt mit seinen verlängerten parallelen Achsen des U-förmigen Teil des Lager-/Dichtelementes 10 reicht und somit zwischen dem Gehäuseunterteil 1 und dem Lager-/Dichtelement 10 angeordnet ist. Die entsprechende Ausnehmung 8 im Gehäuseunterteil 1 weist zusätzlich einen Absatz 14 in Achsrichtung auf, der mit einem korrespondierenden Absatz 15 des Lager-/Dichtelementes 10 zusammen wirkt, so daß sowohl eine zusätzlich verbesserte Abdichtung die Folge ist, als auch eine Positionierung in axialer Richtung der Klappenvorrichtung 4 im Gehäuseunterteil 1 bewirkt.

In seinem zum Gehäuseoberteil 2 weisenden tangential zur Achse liegenden Bereich des U-förmigen Lager-/Dichtelements 10 ist eine weitere Nut 16 ausgebildet, die ebenso wie die Nut 12 senkrecht zur Achsrichtung in Umfangsrichtung des Lager-/Dichtelementes 10 verläuft. In diese Nut 16 wird bei der Herstellung des Luftansaugkanalsystems eine Flüssigkeitsdichtung 17, beispielsweise eine Silikondichtung eingebracht, welche zwischen der Nut 16 und einem mit der Nut 16 korrespondierenden Steg 18 des Gehäuseoberteils 2 zu liegen kommt und dort nach dem Aufsetzen des Oberteils 2 aushärten kann. Entsprechend entsteht eine zuverlässige Abdichtung zwischen den beiden Gehäuseteilen 1, 2 und dem Lager-/Dichtelement 10.

Im Bereich der Wellendurchführung weist die Welle 5 an ihrem Ende einen weiteren Absatz 19 auf, gegen den ein ringförmiger Vorsprung 20 eines Hebels 21, der als Kopplungsglied dient, geschoben wird. Dieser Vorsprung 20 ist somit um die Welle 5 angeordnet und reicht in das Innere des Lager-/Dichtelementes 10. Eine Abdichtung der Welle 5 beziehungsweise des Hebels 21 erfolgt nun über eine auf diesem ringförmigen Vorsprung 20 angeordnete Dichtung, die im vorliegenden Ausführungsbeispiel als Lippendichtring 22 ausgeführt ist. Das Kopplungsglied 21, im vorliegenden Fall also der Hebel, ist formschlüssig auf einem entsprechend ausgeformten Ende der Welle 5 zumindest drehfest angeordnet.

Die erfindungsgemäße Wellendurchführung des dargestellten Ausführungsbeispiels weist somit eine zuverlässige Abdichtung sowohl zwischen dem Gehäuse 1, 2 und dem Lager-/Dichtelement 10 als auch der Welle 5 beziehungsweise des Kopplungsgliedes 21 zum Lager-/Dichtelement 10 auf. Durch die Verbindung von Lager- und Dichtelement wird erreicht, daß keine Fluchtungsfehler beim Einlegen der Welle in das Gehäuse beziehungsweise bei der Montage im Bereich der Wellendurchführung auftreten können. Somit wird ein Klemmen der Tumblewelle vermieden und eine Teilereduzierung erzielt.

Verschiedene Modifikationen des dargestellten Systems sind in den Ansprüchen enthalten. So kann eine solche Wellendurchführung sowohl bei Tumblewellen wie im Ausführungsbeispiel als auch bei Schaltklappenvorrichtungen oder Drallklappenvorrichtung im Luftansaugkanalsystem angewendet werden. Des weiteren kann die Ausführung der Lagerelemente 7 beziehungsweise Lager-/Dichtelemente 10 sowohl durch Montagespritzen als auch durch separate Fertigung von zweiteiligen Lagerelementen 7 beziehungsweise Lager-/Dichtelementen 10 erfolgen, welche eine axiale Teilung aufweisen und beispielsweise durch Clipsen auf die Welle miteinander verbunden werden können. Des weiteren ist es möglich, ein Kopplungsglied in anderer Weise auszubilden und die Welle beispielsweise direkt in die Stellvorrichtung zu führen, wo sie dann über entsprechende Kopplungsglieder direkt angetrieben werden kann. Auch die Befestigung des Kopplungsgliedes 21 auf der Welle 5 kann nicht nur formschlüssig, sondern auch kraft- oder stoffschlüssig erfolgen.

## Patentansprüche

1. Wellendurchführung an einem Luftansaugkanalsystem für Verbrennungskraftmaschinen, wobei das Luftansaugkanalsystem ein zumindest zweiteiliges Gehäuse aufweist, in welchem Luftansaugkanäle ausgebildet sind, wobei zwischen den beiden Gehäuseteilen eine Klappenvorrichtung angeordnet ist, welche eine Welle und zumindest einen auf der Welle angeordneten Klappenkörper aufweist, von einer Stellvorrichtung antreibbar ist und die mit Lagerelementen, die drehbar auf der Welle angeordnet sind, formschlüssig in korrespondierende Ausnehmungen des ersten Gehäuseteils einlegbar ist, wobei ein Dichtelement in einer gemeinsamen Öffnung der beiden Gehäuseteile angeordnet ist, durch die die Welle der Klappenvorrichtung zur direkten oder indirekten Verbindung mit der Stellvorrichtung aus dem Gehäuse nach außen ragt, **dadurch gekennzeichnet, daß** die Welle (5) durch das am nächsten zur Stellvorrichtung angeordnete Lagerelement (10), welches in axialer Richtung im wesentlichen bis zu der axial begrenzenden Außenwand (11) des Gehäuses (1, 2) verlängert ausgeführt ist und gleichzeitig als Dichtelement dient, nach außen geführt ist.

2. Wellendurchführung an einem Luftansaugkanalsystem nach Anspruch 1, **dadurch gekennzeichnet, daß** die Lager-/Dichtelemente (7,10) zweiteilig ausgeführt sind, wobei die Trennebene in Axialrichtung verläuft.

3. Wellendurchführung an einem Luftansaugkanalsystem nach Anspruch 1, **dadurch gekennzeichnet, daß** die Lager-/Dichtelemente (7, 10) einteilig durch Montagespritzen auf der Welle (5) hergestellt sind.

4. Wellendurchführung an einem Luftansaugkanalsystem nach einem der vorhergehenden Ansprüche, **dadurch gekennzeichnet, daß** die Lager-/Dichtelemente (7,10) in Axialrichtung gesehen U-förmig ausgebildet ist, wobei der im wesentlichen ruhende Bereich im ersten Gehäuseteil (1) angeordnet ist.

5. Wellendurchführung an einem Luftansaugkanalsystem nach einem der vorhergehenden Ansprüche, **dadurch gekennzeichnet, daß** das Lager-/Dichtelement (10) in das erste Gehäuseteil (1) unter Zwischenlage einer vorzugsweise angespritzten Kunststoffdichtung (13) eingebracht ist, welche in einer über den mit dem ersten Gehäuseteil (1) korrespondierenden Umfang des Lager-/Dichtelementes (10) verlaufenden Nut (12), angeordnet ist.

6. Wellendurchführung an einem Luftansaugkanalsystem nach einem der vorhergehenden Ansprüche, **dadurch gekennzeichnet, daß** das Lager-/Dichtelement (10) an seinem im zweiten Gehäuseteil (2) angeordneten Bereich eine senkrecht zur Achse verlaufenden Nut (16) aufweist, in welche ein am zweiten Gehäuseteil (2) ausgebildeter Steg (18) unter Zwischenlage einer Flüssigkeitsdichtung (17) eingreift.

7. Wellendurchführung an einem Luftansaugkanalsystem nach einem der vorhergehenden Ansprüche, **dadurch gekennzeichnet, daß** auf einem nach außen weisenden Ende der Welle (5) ein Kopplungsglied (21) zur Übertragung einer Drehbewegung von der Stellvorrichtung auf die Welle (5) angeordnet ist, welches einen ringförmigen Vorsprung (20) aufweist, der in das Lager-/Dichtelement (10) hinein ragt und auf dem eine Dichtung (22) angeordnet ist, die vom Lager-/Dichtelement (10) umschlossen ist.

8. Wellendurchführung an einem Luftansaugkanalsystem nach Anspruch 7, **dadurch gekennzeichnet, daß** das Kopplungsglied (21) ein Hebel ist, der über ein Gestänge mit der Stellvorrichtung in Verbindung steht.

9. Wellendurchführung an einem Luftansaugkanalsystem nach Anspruch 7, **dadurch gekennzeichnet, daß** die Dichtung (22) ein Lippendichtring oder eine angespritzte Dichtung ist.

10. Wellendurchführung an einem Luftansaugkanalsystem nach einem der Ansprüche 7 bis 9, **dadurch gekennzeichnet, daß** das Kopplungsglied (21) formschlüssig drehfest auf der Welle (5) befestigt ist.
